# EUROPÄISCHE PATENTSCHRIFT

(11) **EP 2 397 737 B1**
(45) Veröffentlichungstag und Bekanntmachung des Hinweises auf die Patenterteilung: **27.08.2014**
(21) Anmeldenummer: 11167657.3
(22) Anmeldetag: 26.05.2011
(51) Int. Cl.: F16L 5/02, F16L 59/10

(54) **Dichtmanschette sowie System aus der Dichtmanschette und einer Leitung**
Sealing sleeve and system comprising the sealing sleeve and a guide
Manchette étanche et système constitué de la manchette étanche et d'une conduite

(30) Priorität: 21.06.2010 DE 102010030305
(43) Veröffentlichungstag der Anmeldung: 21.12.2011
(73) Patentinhaber: Silu Verwaltung AG, 6045 Meggen (CH)
(72) Erfinder: Sieber, Reto, 6004 Luzern (CH); Sieber, Marco, 6048 Horw (CH)
(74) Vertreter: Lang, Johannes

(56) Entgegenhaltungen:
- EP-A2- 1 614 824
- DE-A1-102007 052 278
- DE-U1- 29 703 352
- DE-U1- 29 911 070
- US-A1- 2008 295 896

## Beschreibung

Die Erfindung betrifft eine Dichtmanschette zum luftdichten Abdichten von Leitungsdurchführungen durch eine Gebäudehülle sowie ein System aus einer solchen Dichtmanschette und einer Leitung. Dichtmanschetten finden überall da Anwendung, wo Leitungen, z.B. Antennenkabel, Solarrohre, Abflussleitungen, Lüftungen und Abgasrohre eine Gebäudehülle, z.B. die Dampfsperre bzw. - bremse, durchdringen und für eine dauerhafte Abdichtung der Gebäudehülle gesorgt werden muss. Eine Abdichtung der Gebäudehülle ist vom deutschen Gesetzgeber in der Wärmeschutzverordnung gefordert und wird in der DIN 4108-7 beschrieben. Auch international wird den Anforderungen an die Dichtheit von Gebäudehüllen zur CO₂-Reduktion durch die entsprechenden Gesetzgeber immer mehr Gewicht eingeräumt. Zur Messung der Dichtheit wird die Gebäudehülle im Blower-Door-Verfahren mit Hilfe von Differenzdrücken zwischen dem Gebäudeinneren und dem Aussendruck überprüft.

Schon durch ein kleines Kabelloch in der Gebäudehülle können enorme Mengen an Wasserdampf durch Konvektion in eine Gebäudekonstruktion eindringen. Dies kann zu Bauschäden durch Kondensat in der Dämmung oder der Gebäudekonstruktion z.B. des Daches führen.

Wie die innere Gebäudehülle ist auch die winddichte, äussere Gebäudehülle bei Leitungsdurchführungen entsprechend abzudichten. Vor allem in der Bauphase können durch Leitungsdurchführungen bzw. Rohrdurchdringungen, z.B. durch die Unterspannbahn, Undichtigkeiten entstehen, durch die ungehindert Regenwasser eindringen kann. Die erfindungsgemässe Dichtmanschette ist auch im Aussenbereich für das Abdichten solcher Durchdringungen geeignet.

Zur Abdichtung einer Gebäudehülle an Leitungsdurchführungen verwendet ein Handwerker meist einseitige Klebebänder, die er in Stücken schuppenartig um die Leitungen aufbringt. Dabei wird ein Teil des Klebebandes auf den Untergrund, die Gebäudehülle auf der ebenen Wand- oder Dachfläche, geklebt, und der Rest des Klebebandes wird an der Leitung verklebt, welche diese Gebäudehülle durchdringt. Der Handwerker formt also eine Art dichtenden Kragen mit diesen Klebebandstücken. Dieses schuppenartige Verkleben von Leitungsdurchführungen ist z.B. in der Gebrauchsanleitung des Klebebandes "Rissan ®" der Firma SIGA genau beschrieben.

Die bekannten Klebebänder zur Abdichtung dichten zwar zuverlässig ab und sind günstig, sie sind jedoch auch zeitintensiv zu verarbeiten, da die Klebebandstücke einzeln aufgeklebt werden müssen. Bei der Abdichtung einer Leitung mit einem Durchmesser von 5 cm sind ca. 6 Klebebandstücke erforderlich, deren Verkleben einen erheblichen Zeitaufwand darstellt.

Als weitere Form der Abdichtung sind vorgeformte Dichtmanschetten bekannt. Solche Dichtmanschetten werden in der deutschen Gebrauchsmusterschrift DE 20 2004 005 976 U1 beschrieben. Diese offenbart eine dampfdichte Durchführeinrichtung für eine Leitung, mit einer aus einem elastischen Material bestehenden Tülle, die beim Gebrauch zumindest im Randbereich dampfdicht an der dann durch einen Dämmstoff eine Bauteiles geführten Leitung anliegt, und mit einem sich an der Tülle anschliessenden Kragen, der dampfdicht mit einer Gebäudehülle verbindbar ist, wobei die Tülle und der Kragen in Längsachsrichtung durchgehend geschlitzt sind, um eine Leitung seitlich einführen zu können.

Die bekannten vorgeformten Dichtmanschetten sind in ihrer Herstellung relativ teuer, da sie meist aus verschiedenen Materialien wie Kautschukkragen, Trägermaterial und Klebstoff bestehen. Diese müssen gestanzt und die Tülle mit dem Trägermaterial vormontiert werden. Besteht die bekannte Dichtmanschette aus einem einzigen Material, so ist es durch ihre dreidimensionale Form (Tülle und Kragen) nicht möglich, diese zu stanzen. Vielmehr müssen diese extrudiert, gepresst oder gegossen werden, wofür Formen entworfen und hergestellt werden müssen. Dies macht die Dichtmanschetten aufgrund der hohen Herstellungs- und Instandhaltungskosten der Formen sogar noch teurer. Damit die Tülle eine Leitungsdurchführung abdichtet, muss der Durchmesser der Tülle genau auf den Durchmesser der durchgeführten Leitung abgestimmt sein. Daher ist eine Dichtmanschette nur für eine sehr begrenzte Anzahl an Leitungsdurchmessern geeignet, im Extremfall nur für einen Einzigen. Dies verursacht bei der Herstellung immense Kosten, da für jede Dichtmanschettengröße eine Herstellungsform bereitgestellt werden muss. Ferner müssen die verschiedenen Dichtmanschettengrößen im Lager vorgehalten werden, was sowohl dem Hersteller als auch dem Vertrieb enorme Kosten aufgrund der Lagerhaltung und der Kapitalbindung verursacht.

DE 000029911070 U1 offenbart eine Dichtungsmanschette zum Abdichten eines Rohrdurchgangs in einer Maueroberfläche, die aus einem elastischen Material besteht. Die Dichtungsmanschette weist einen Zylinderabschnitt und einen im Wesentlichen flachen ringförmigen Ringabschnitt auf, der an eine Maueroberfläche anlegbar ist. Der Ringabschnitt ist als offener Ring ausgebildet und entlang einer zwei Ränder definierenden Trennlinie öffnenbar.

Aus der DE 10 2007 052 278 A1 ist eine Vorrichtung zur Abdichtung eines mit einer Baufolie, einer Klebefolie oder einem Klebeband flächig abgedeckten Bauelement eines Gebäudes im Bereich eines das Bauelement durchdringenden Bauteiles bekannt, bei welcher ein Mittel zum Zuschneiden der Baufolie, der Klebefolie oder des Klebebandes vorgesehen ist, welches aus mindestens einer Zuschneideschablone gebildet ist, mittels der ein Folienzuschnitt aus der Baufolie, der Klebefolie oder dem Klebeband erzeugbar ist, mit welchem aneinander angrenzende Randzonen des Bauelementes und des Bauteiles abdeckbar sind.

Aus der DE 297 03 352 U1 ist eine verstellbare Dichtmanschette aus elastischem Material mit einer Grundfläche mit einer Öffnung und einem sich von der Grundfläche im Bereich der Öffnung erstreckenden Kragen bekannt, wobei die Dichtmanschette vom Außenrand der Grundfläche zum oberen Rand des Kragens derart durchtrennt ist, dass die einen an die Trennstelle angrenzenden Bereiche des Kragens und der Grundfläche derart anordenbar sind, dass sie jeweils die anderen, an die Trennstelle angrenzenden Bereiche überlappen.

Die Aufgabe der vorliegenden Erfindung besteht also darin, die obigen Nachteile des Standes der Technik zu überwinden und eine Dichtmanschette bereitzustellen, welche einfach und schnell zu montieren ist, eine Leitungsdurchführung zuverlässig abdichtet, für eine Vielzahl an Leitungsdurchmessern anpassbar ist und geringe Herstellungs- und Lagerkosten verursacht.

Diese Aufgabe wird durch eine Dichtmanschette nach Anspruch 1 und ein System aus einer Dichtmanschette und einer Leitung nach Anspruch 14 gelöst.

Bei der erfindungsgemässen Dichtmanschette wird die Dichtmanschette, falls kein Schlitz vorhanden ist, vor dem Einsatz an der Trennmarkierung oder der Sollbruchstelle durchtrennt, so dass auch dann ein Schlitz vorhanden ist. Dann wird die Dichtmanschette um die abzudichtende Leitungsdurchführung geführt. Schliesslich wird der Schlitz der Dichtmanschette durch ein übereinander Bringen der Randbereiche des Schlitzes und ein Verkleben derselbigen geschlossen, bevor die Dichtmanschette an der Gebäudehülle verklebt wird.

Die erfindungsgemässe Dichtmanschette bietet den Vorteil, dass diese in einem einzigen Arbeitsschritt auf die Gebäudehülle aufgebracht werden kann.

Des Weiteren kann diese aus einer Gesamtheit aus Trägermaterial und Klebeschicht einfach mit bestehenden Vorrichtungen ausgestanzt werden. Ein kompliziertes individuelles Herstellungsverfahren mit kostspieligen Formen ist nicht notwendig.

Durch die Verformbarkeit können die Randbereiche leicht übereinander verklebt werden, unabhängig davon, welchen Durchmesser die abzudichtende Leitung aufweist. Dadurch kann die erfindungsgemässe Dichtmanschette für eine Vielzahl von Leitungsdurchmessern verwendet werden, wobei eine ideale Abdichtung um die Leitung gewährleistet bleibt. Dadurch werden Herstellungs- sowie Lagerungskosten eingespart. Auch kann sie für das Abdichten mehrerer Leitungen in einer Leitungsdurchführung verwendet werden, was ein wesentlicher Vorteil gegenüber den Dichtmanschetten des Stands der Technik ist, bei denen bisher Doppeltüllendichtmanschetten oder gar zwei Dichtmanschetten verwendet werden müssen. Durch die Trennmarkierung, die Sollbruchstelle oder den Schlitz kann die Dichtmanschette schnell und zuverlässig entlang einer geraden Linie geöffnet werden.

Ferner können die Trennmarkierung, die Sollbruchstelle oder der Schlitz einfach eingebracht werden, möglichst sogar in einem Arbeitsschritt mit dem Ausstanzen der Gesamtheit aus Trägermaterial und/oder Klebeschicht.

In einer bevorzugten Ausführungsform besteht das Trägermaterial aus Vlies oder einem mit Kunststoff beschichteten Vlies. Vliese bzw. Vliesstoffe sind besonders gut verformbar und flach, während sie gleichzeitig reißfest und beständig sind. Auch sind sie biegsam und ausreichend dehnbar für die erfindungsgemäße Verwendung. Vliese sind in vielen Varianten von verschiedensten Herstellern sehr kostengünstig zu erwerben, was sich vorteilhaft auf die Herstellungskosten der Dichtmanschette auswirkt. Schließlich sind Vliese besonders gut mit einer Klebeschicht zu versehen, da sich diese mit den fasrigen Vliesen sehr gut verbindet.

In der bevorzugten Ausführungsform ist die Klebeschicht auf zumindest einer Seite der Manschette von einem Liner abgedeckt. Durch das Abdecken der Klebeschicht mit einem Liner werden die Lagerung, der Transport und die Montage der Dichtmanschette wesentlich vereinfacht.

In einer weiteren bevorzugten Ausführungsform weist der Liner mindestens einen Schlitz auf. Somit kann der Liner beim Ankleben der Dichtmanschette an die Gebäudehülle etappenweise abgezogen werden.

In einer weiteren bevorzugten Ausführungsform besteht der Liner aus mindestens zwei Teilen, die leicht überlappend angeordnet sind. Aufgrund der Zweiteilung und der Überlappung kann der Liner vom Verarbeiter leicht und etappenweise entfernt werden. Insbesondere lässt sich die Überlappung leicht ertasten, so dass der Liner ohne Sichtkontakt entfernt werden kann.

In einer weiteren bevorzugten Ausführungsform weist der Liner in einer Richtung, insbesondere in paralleler Richtung zu der Trennmarkierung, der Sollbruchstelle oder dem Schlitz, eine geringe Weiterreißkraft und Führungsmittel auf, durch welche sich eine Risslinie im Wesentlichen in dieser Richtung ausbreitet. Dadurch kann der Liner entlang dieser Richtung gerade und an einem Stück abgerissen werden, ohne dass die gewollte Risslinie angeritzt oder durch eine Faltung der Dichtmanschette vordefiniert werden muss.

In einer weiteren bevorzugten Ausführungsform weist die Klebeschicht ein Flächengewicht von mindestens 0,38kg/m², bevorzugt mindestens 0,7kg/m², besonders bevorzugt mindestens 1kg/m² und am Bevorzugtesten mindestens 1,5kg/m² auf. Dadurch, dass eine gewisse Masse an Klebstoff vorhanden ist, wird gewährleistet, dass die Klebstoffschicht dick genug ist, um sich der Oberfläche einer abzudichtenden Leitung anzupassen, insbesondere wenn die Dichtmanschette unsauber verklebt wird.

In einer weiteren bevorzugten Ausführungsform weist die Dichtmanschette im Wesentlichen im Zentrum eine Aussparung auf. In Abhängigkeit von der Größe dieser Aussparung können dann Leitungen mit verschiedenem Durchmesser in die Dichtmanschette eingebracht und abgedichtet werden.

In einer weiteren bevorzugten Ausführungsform ist das Trägermaterial wasserdicht und/oder durch Zugabe von UV-Schutzmittel UV-beständig ausgebildet. Somit kann die erfindungsgemäße Dichtmanschette auch auf einer äußeren Gebäudehülle angebracht werden, wo sie dem Sonnenlicht und der Witterung ausgesetzt ist.

Das aus einer Dichtmanschette und einer Leitung bestehende, erfindungsgemässe System hat den Vorteil, dass die Dichtmanschette bei der Montage individuell an den Durchmesser der Leitung angepasst werden kann. Dabei entsteht direkt am Übergang zur Leitung ein Kragen. Dieser schmiegt sich an die Leitung an, wodurch eine optimale Abdichtung der Leitungsdurchführung gewährleistet wird. Dies ist besonders wichtig, da der Übergang zur Leitung kritisch für die Abdichtung ist.

Ausführungsbeispiele der Erfindung werden nun anhand von Zeichnungen näher beschrieben.
Figur 1 stellt einen schematischen Querschnitt durch eine erfindungsgemäße Dichtmanschette dar.
Figur 2 stellt eine schematische Draufsicht auf eine erfindungsgemäße Dichtmanschette gemäß einer ersten Ausführungsform mit Trennmarkierung dar.
Figur 3 stellt eine schematische Draufsicht auf eine erfindungsgemäße Dichtmanschette gemäß einer zweiten Ausführungsform mit Sollbruchstelle dar.
Figur 4 stellt eine schematische Draufsicht auf eine erfindungsgemäße Dichtmanschette gemäß einer dritten Ausführungsform mit Schlitz dar.
Figur 5 stellt eine schematische Draufsicht auf eine erfindungsgemäße Dichtmanschette gemäß einer vierten Ausführungsform mit einer Aussparung dar.
Figur 6 stellt eine Ansicht der erfindungsgemäßen Dichtmanschette mit zweiteiligem Liner vor der Montage dar.
Figur 7 stellt eine Ansicht der erfindungsgemäßen Dichtmanschette mit zweiteiligem Liner bei der Montage dar.
Figur 8 stellt eine Ansicht des erfindungsgemäßen Systems aus Dichtmanschette und einer Leitung im verklebten Zustand dar.

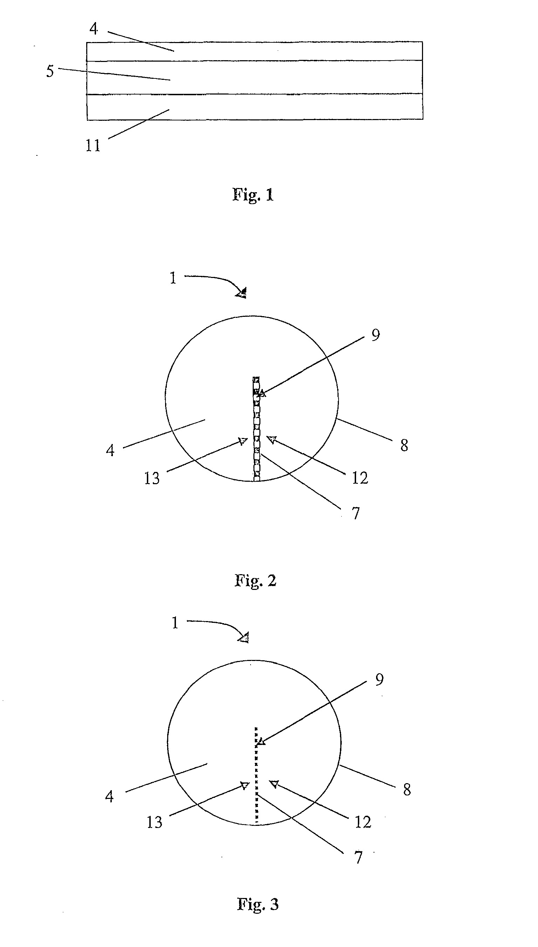

Wie in Fig. 1 gezeigt besteht die Dichtmanschette 1 aus einem Trägermaterial 4, auf welchem eine Klebeschicht 5 aufgebracht ist. Diese Klebeschicht 5 kann mit einem Liner 11 abgedeckt sein, so dass die Dichtmanschette 1 nicht ungewollt auf sich selbst oder auf einem Gegenstand verklebt, bevor diese auf einer Gebäudehülle 3 aufgebracht wird.

Das Trägermaterial 4 kann aus einer Aluminiumfolie, einer mit Aluminium bedampften Kunststofffolie, einer Aluminium-Kunststoffverbundfolie, einer Metallfolie, einem Vlies, einer Kunststofffolie, einem Gewebe oder einem sonstigen geeigneten Material bestehen. Auch eine beliebige Kombination von verschiedenen Materialien ist möglich. Kombinationen für die oben beispielhaft erwähnten Materialien sind leicht herzustellen, zum Beispiel durch Kaschierungen.

Bevorzugt ist das Trägermaterial wasserdicht. Die Wasserdichtheit beträgt dabei mindestens W1 nach DIN en 1928.

Weiterhin sollte das Trägermaterial 4 der Dichtmanschette 1 gut verformbar sein.

Daher ist das Trägermaterial 4 bevorzugt aus einem Vlies oder einem mit Kunststoff beschichteten Vlies, wobei das Vlies oder das mit Kunststoff beschichtete Vlies über ein Flächengewicht von mindestens 0,01kg/m², bevorzugt mindestens 0,03kg/m², und noch bevorzugter mindestens 0,06kg/m² verfügt.

Als geeignetes Vlies bzw. geeigneten Vliesstoff kann aus einem umfangreichen Portfolio, je nach gewünschten mechanischen und chemischen Eigenschaften gewählt werden. Zur Herstellung dieser Vliese eignen sich mineralische Fasern, stellvertretend und rein beispielhaft sind hier Fasern aus Glas, Asbest, Mineralwolle und Basalt anzuführen, tierische Fasern, stellvertretend und rein beispielhaft sind hier Fasern aus Seide und Wolle anzuführen, pflanzliche Fasern, stellvertretend und rein beispielhaft sind hier Fasern aus Baumwolle, Hanf und Jute anzuführen, sowie chemische Fasern, wobei hier zwischen aus natürlichen und aus synthetisch Polymeren hergestellten Fasern unterschieden wird.

Bei den chemischen, aus natürlichen Polymeren hergestellten Fasern ist stellvertretend und rein beispielhaft Cellulose als geeignetes Polymer anzuführen. Die chemischen, aus synthetischen Polymeren hergestellten Fasern oder auch Filamente, sogenannte Endlosfasern, können aus einem Polymer aus der folgenden Polymergruppe bestehen: Polyamid (PA) einschließlich PA 6.6 (Markenbezeichnung Nylon) und PA 6.0 (Markenbezeichnung Perlon), Polyester einschließlich Polyethylenterephthalat (PET) und Polybutylenterephthalat (PBT), Polypropylen (PP), Polyethylen (PE), Polyvinylchlorid (PVC), Polyvinyldichlorid (PVDC), Polyphenylensulfid (PPS), Polyacrylnitril (PAN), Polyimid (PI), Polytetrafluorethylen (PTFE, Markenname Teflon), Polyamidimid (Markenname Kermel) und Armide einschliesslich meta-Aramid (Markenname Nomex) und para-Aramid (Markenname Kevlar).

Des Weiteren kann der Vliesstoff auch aus einer beliebigen Kombination oben stehender Polymergruppen bestehen, welche beispielsweise durch Fasermischung hergestellt wird. Eine solche Fasermischung kann aus zwei oder mehreren Fasern unterschiedlicher Polymergruppen bestehen oder aus sogenannten Kombi-Fasern, bei welchen jede einzelne Faser aus zwei oder mehr unterschiedlichen Polymergruppen besteht. Als Kombi-Fasern kommen stellvertretend und rein beispielhaft die Produkte der Produktgruppe Evolon® der Firma Freudenberg, aus Polyamid und Polyester bestehende Mikrofilamente, in Frage. Die Fasern werden durch ein geeignetes Spinnverfahren, z.B. Trocken-, Nass-, Schmelz-, Matrixspinnen, etc., hergestellt und auf eine definierte Fläche verteilt. Die flächig verteilten Fasern werden in diesem losen Verbund als Vlies bezeichnet. Zur Erhöhung der inneren Festigkeit werden diese Vliese nachfolgend verfestigt. Als geeignete Verfestigungsverfahren sind mechanische, durch Vernadelung oder Wasserstrahlverfestigung, chemische, durch Zugabe von geeigneten Bindemitteln, und thermische Verfahren, durch das Erweichen der Fasern in einem geeigneten Gasstrom, zwischen beheizten Walzen oder auch in einem Dampfstrom, bekannt. Das verfestigte Vlies wird als Vliesstoff bezeichnet. Neben Vliesen können auch Filze, Gewebe, Stricke und Gewirke aus oben genannten Materialien als Trägermaterialien 4 eingesetzt werden.

In einer anderen Ausführungsform wird Kunststofffolie als Trägermaterial 4 verwendet, die besonders gut dehn- und verformbar ist.

Bei der Kunststofffolie handelt es sich um orientiertes Polyamid (OPA), Cast-Polyamid (CPA), orientiertes Polypropylen (OPP) einschließlich biorientiertem Polypropylen (BOPP), Polyethylen (PE) hoher und niedriger Dichte, Polypropylen (PP), Polyvinylchlorid (PVC), Polystyrol (PS), Polymethylmethacrylat (PMMA), Polyvinyldichlorid (PVDC), Polyvinyldifluorid (PVDF), Polyethylennaphthalat (PEN), Polyester einschließlich Polyethylenterephthalat (PET) und Polybutylenterephthalat (PBT), Terpolymer-Acrylnitril-Butadien-Styrol (ABS), Polycarbonat (PC). Des Weiteren kann die Folie auch aus einer beliebigen Kombination oben stehender Materialgruppen bestehen, welche beispielsweise durch Formulierungen (Blend) oder Kaschierungen hergestellt wird. Diese Folie kann mit den üblichen Verfahren wie Blasfolienextrusion, Coextrusions- oder im Cast-Extrusions-Verfahren hergestellt werden. Ebenfalls ist die Herstellung mittels Kalanderverfahren möglich.

Die plastische Verformbarkeit einer Kunststofffolie und damit Eignung für die Dichtmanschette 1 wird gemäß der DIN EN ISO 527-01 gemessen, wobei bei allen Messungen die Prüfgeschwindigkeit auf 0,1m/min angepasst wurde. Gemessen werden die Bruchdehnungen und die Kräfte bei jeweils 100% Dehnung (F_{100%}) in Längs- (MD) oder Querrichtung (CD) der Folie.

Geeignete Trägermaterialien 4 weisen in Längsrichtung (MD) bevorzugt gleichzeitig eine Dehnbarkeit von mehr als 50% und eine Kraft bei 100% Dehnung (F_{100%}) von weniger als 40N/0,015m, besonders bevorzugt eine Dehnbarkeit von mehr als 100% und eine Kraft bei 100% Dehnung (F_{100%}) von weniger als 25N/0,015m, noch bevorzugter eine Dehnbarkeit von mehr als 300% und eine Kraft bei 100% Dehnung (F_{100%}) von weniger als 10N/0,015m und am bevorzugtesten eine Dehnbarkeit von mehr als 350% und eine Kraft bei 100% Dehnung (F_{100%}) von weniger als 7,5N/0,015m auf.

Besonders bevorzugt sind die Dehnbarkeiten und Kräfte bei 100% Dehnung sowohl in Längs- (MD) als auch in Querrichtung (CD) des Trägermaterials 4 innerhalb der oben beschriebenen Bereiche.

Das Trägermaterial 4 kann auch UV-beständig ausgebildet sein, so dass es auch auf der äußeren Gebäudehülle unter Sonneneinstrahlung verwendet werden kann. Bevorzugt beträgt die UV-Beständigkeit bei direkter Sonneneinstrahlung mindestens 4 Monate, noch bevorzugter mindestens 6 Monate. Als Zugabe von UV-Schutzmittel für das Trägermaterial 4 eignen sich insbesondere UV Absorber, z.B. Benzophenone, Triazole oder Triazine, typische Hindered-Amine-Light-Stabilizer (HALS), die aggressive Reaktionen der Photooxidationsprodukte unterbinden und die als polymere, oligomere oder andere substituierte Stabilisatoren eingesetzt werden können, und Nickel-Quencher. Die genannten UV-Schutzmittel können auch in Kombination eingesetzt werden oder als Masterbatches mit Thermostabilisatoren wie Phenolen oder Phosphiten verwendet werden. Auch können Graphit-Batches verwendet werden. Kunststoffe, die denen solche UV-Schutzmittel zugesetzt werden, können im Außenbereich über mehrere Monate der freien Bewitterung ausgesetzt werden. Somit kann die erfindungsgemäße Dichtmanschette auch auf einer äußeren Gebäudehülle angebracht werden, wo sie dem Sonnenlicht und der Witterung ausgesetzt ist.

Die Klebeschicht 5 der Dichtmanschette 1 wird z.B. durch Beschichtung einer wässrigen Polymerdispersion oder einer Lösemitteldispersion, einem Hotmelt, einem Butylklebstoff, einem Bitumenklebstoff oder einer Kombination dieser Klebstoffe realisiert. Der Lösungsmittelanteil der wässrigen Polymerdispersion beträgt weniger als 20%, bevorzugt weniger als 10% und besonders bevorzugt weniger als 3%. Alternativ kann auch jeweils eine Klebeschicht 5 auf beiden Seiten des Trägermaterials 4 angeordnet sein, so dass die Dichtmanschette 1 beidseitig verklebt werden kann.

Die Klebeschicht 5 hat ein Flächengewicht von mindestens 0,14kg/m², bevorzugt mindestens 0,38kg/m², bevorzugter mindestens 0,7kg/m², besonders bevorzugt mindestens 1kg/m² und am bevorzugtesten mindestens 1,5kg/m² auf.

Bei dem Liner 11 handelt es sich um jede bekannte Art von Liner, der als lösbare Abdeckung für die Klebeschicht 5 verwendet werden kann. Insbesondere eignet sich für den Liner 11 Papier oder eine Kunststofffolie mit einem Flächengewicht von 0,02kg/m² bis 0,2kg/m², bevorzugt 0,06kg/m² bis 0,2kg/m². Der Liner 11 ist ein- oder beidseitig mit einer klebstoffabweisenden Beschichtung versehen, welche bevorzugt silikonhaltig ist.

Insbesondere eignet sich ein Liner 11, der in einer Richtung, insbesondere in paralleler Richtung zu der Trennmarkierung, der Sollbruchstelle oder dem Schlitz 7 der Dichtmanschette 1, eine geringe Weiterreißkraft und Führungsmittel aufweist, durch welche sich eine Risslinie im Wesentlichen in dieser Richtung in dem Liner ausbreitet.

Die Messungen der Weiterreißkraft werden nach der Norm DIN 53356 durchgeführt. Bewertet wird das Verhältnis der Weiterreißkräfte in [md] und in [cd] zueinander. Dabei ist das Verhältnis der Weiterreißkraft in [cd] dividiert durch die Weiterreißkraft in [md] größer 5, bevorzugt größer 10 und besonders bevorzugt größer 15.

Die Führungsmittel können Verstärkungsfäden sein. Als Verstärkungsfäden eignen sich generell Kunststoffe, Aramid- (aromatisches Polyamid), Kohlenstoff-und Glasfasern, besonders geeignet sind PP oder Polyester. Aber auch textile Fäden aus Zellwolle bzw. Viskose oder Baumwolle, oder eine Kombination daraus sind einsetzbar. Dünne Metalldrähte können ebenfalls zum Einsatz kommen.

Die ersten Verstärkungsfäden sind auch nicht auf Fäden im eigentlichen Sinne beschränkt. Vielmehr können diese jegliche Art von durchgehender Verstärkung wie ein Band, ein Streifen oder eine Verdickung des Linermaterials sein.

Alternativ können als Führungsmittel statt der ersten Verstärkungsfäden in dem Liner 11 Hohlräume verwendet werden, welche mittels eines Schäumungsverfahrens in den Liner 11 eingebracht werden. Dieser Liner 11 mit Hohlräumen weist eine hohe Weiterreißkraft in [cd], das heißt quer zur Maschinenrichtung auf.

Die Hohlräume bewirken eine Schwächung des Liners 11, was zu einer vereinfachten Risslinienbildung führt. Die Ausbreitung dieser Risslinie in dem Liner 11 orientiert sich dann an diesen Hohlräumen.

Diese Hohlräume können durch ein spezielles Herstellungsverfahren zusätzlich in einer gewünschten Richtung, insbesondere in paralleler Richtung zu der Trennmarkierung, der Sollbruchstelle oder dem Schlitz der Dichtmanschette 1, orientiert sein.

Hierbei macht man sich einen Effekt zu Nutze, welcher dem Abreißen einer perforierten Folie ähnelt. Die Hohlräume bilden Ketten, welche einer Perforationslinie durch eine Folie entsprechen, und entlang welcher sich der Liner 11 weiterreisst, wenn er an einem Rand angerissen ist und eine Weiterreißkraft auf den Liner 11 wirkt.

Alternativ kann der Liner 11 zweiteilig ausgebildet sein, so dass beim Aufbringen der Dichtmanschette 1 auf eine Gebäudehülle 3 zunächst ein erster Teil 11 a von der Klebeschicht 5 abgelöst werden kann. So kann jener Abschnitt der Klebeschicht 5, welcher sich unter dem ersten Teil 11a befindet, mit der Gebäudehülle 3 verklebt werden, bevor der Abschnitt unter dem zweiten Teil 11b verklebt wird. Dies ermöglicht eine sehr gute Kontrolle beim Verkleben der Dichtmanschette 1 auf der Gebäudehülle 3, wodurch möglich Falten in der Dichtmanschette 1 verhindert werden können. Zusätzlich können die beiden Teile 11 a, 11b des Liners 11 auch leicht überlappend angeordnet sein, d.h., dass ein Teil 11a über den anderen Teil 11b übersteht. Dadurch ist gewährleistet, dass sich die Teile 11a, 11b einfach und ohne Sichtkontakt von der Klebeschicht 5 ablösen lassen, da die Überlappung mit den Fingern leicht ertastet und ergriffen werden kann.

Figur 2 stellt eine erste Ausführungsform der Dichtmanschette 1 dar. Die Dichtmanschette 1 ist kreisförmig ausgebildet, könnte aber auch eine ovale, viereckige, sechseckige oder jede andere geeignete Form zum Abdecken eines Lochs aufweisen.

In dieser Ausführungsform weist die Dichtmanschette 1 eine Trennmarkierung 7 auf, welche vom äußeren Rand 8 in Richtung zum Zentrum 9 der Dichtmanschette 1 verläuft und gegebenenfalls über das Zentrum 9 hinausgeht. Entlang dieser Trennmarkierung 7 wird die Dichtmanschette 1 zur erfindungsgemäßen Benutzung zum luftdichten Abdichten von Leitungsdurchführungen bis über ein Zentrum 9 der Dichtmanschette 1 hinaus aufgetrennt, so dass sich ein Schlitz 7 bildet.

Entlang der Trennmarkierung 7, welche aus einer Linie, einer Prägung, einer Ritzung oder jeder anderen geeigneten Markierung einer Trennlinie besteht, wird die Dichtmanschette 1 mittels eines Schneidewerkzeugs oder mittels Zerreißens aufgetrennt.

In einer zweiten Ausführungsform gemäß Fig. 3 weist die Dichtmanschette 1 eine Sollbruchstelle 7 auf, welche als Perforation, als Schlitzung oder als Knick ausgebildet ist. Somit ist kein Schneidwerkzeug zum Auftrennen nötig und der Schlitz 7 kann sicher und wohl definiert in die Dichtmanschette 1 eingebracht werden.

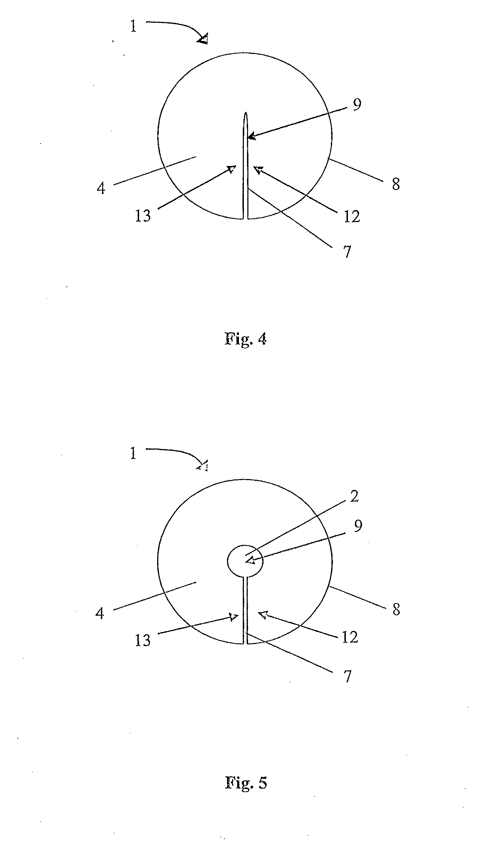

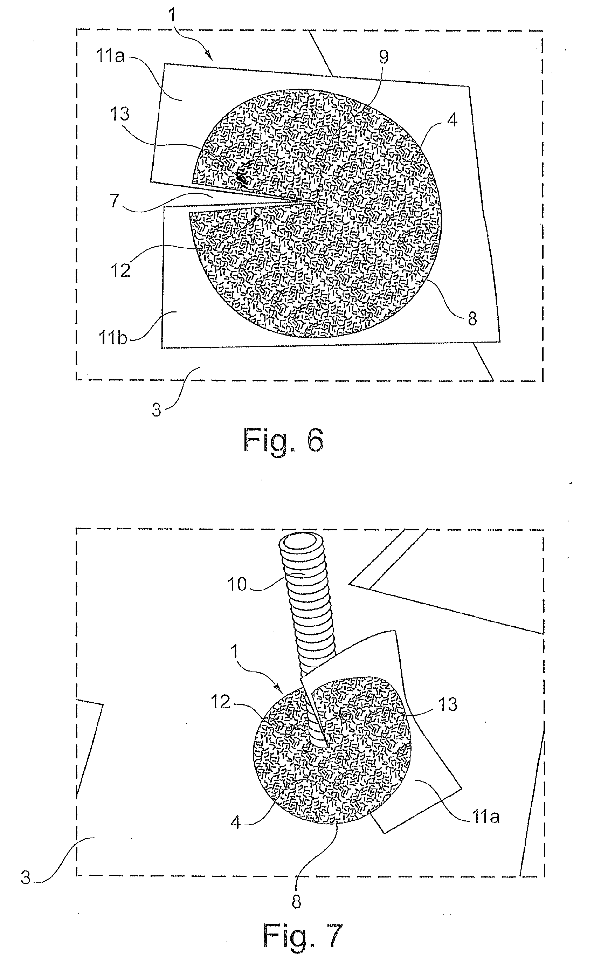

Die Figuren 4 und 6 stellen eine dritte Ausführungsform der Dichtmanschette 1 dar. In dieser Ausführungsform ist die Sollbruchstelle 7 als Schlitz im Trägermaterial 4 ausgeformt. Ein Auftrennen der Dichtmanschette 1 zum Einführen einer Leitung 10 entfällt in dieser Ausführungsform ganz oder besteht nur noch im Auseinanderziehen eines ersten Randbereichs 12, welcher in den Figuren 2 bis 5 einem Flächenbereich rechts der Trennmarkierung, der Sollbruchstelle oder des Schlitzes 7 entspricht, und eines zweiten Randbereichs 13, welcher in den Figuren 2 bis 5 einem Flächenbereich links der Trennmarkierung, der Sollbruchstelle oder des Schlitzes 7 entspricht, welche eventuell durch den Klebstoff der Klebeschicht 5 aneinander haften. Alternativ kann aber auch die Klebeschicht 5 und/oder der Liner 11 zusätzlich mit einem Schlitz 7 versehen sein, so dass eine Leitung 10 schon vor dem Entfernen des Liners 11 in den Schlitz 7 eingeführt werden kann. Besonders bevorzugt ist dabei ein Schlitz zwischen zwei Teilen eines zweiteiligen Liners 11a, 11b wie in Fig. 6 gezeigt so angeordnet, dass er zu dem Schlitz 7 in dem Trägermaterial 4 und/oder der Klebeschicht 5 parallel liegt.

Der Schlitz 7 des Trägermaterials 4, der Klebeschicht 5 und/oder des Liners 11 weist bevorzugt eine Breite von mindestens 0,0005m, noch bevorzugter mindestens 0,001m, besonders bevorzugt mindestens 0,002m und am bevorzugtesten mindestens 0,003m auf.

Da der Schlitz 7 bevorzugt über das Zentrum 9 hinaus reicht, befindet sich eine Leitung 10, welche in den Schlitz 7 eingeführt ist, ungefähr in der Mitte der Dichtmanschette 1.

Bei anderen Ausführungsformen, die nicht kreisförmig sind, entspricht das Zentrum 9 der Dichtmanschette 1 dem Ort, welcher in allen Richtungen auf etwa der Hälfte des Durchmessers der Dichtmanschette 1 liegt.

In einer vierten Ausführungsform, die auf den vorhergehenden Ausführungsformen aufbaut und in Fig. 5 dargestellt ist, weist die Dichtmanschette 1 zusätzlich eine Aussparung 2 auf, welche im Wesentlichen um das Zentrum 9 der Dichtmanschette 1 angeordnet ist. Diese Aussparung 2 weist eine kreisförmige, ovale, viereckige oder jede andere Form auf, um eine Leitung 10 darin aufzunehmen. Durch die Aussparung 2 kann eine Leitung 10 wesentlich einfacher in die Dichtmanschette 1 eingebracht werden.

Die Figuren 6 bis 8 zeigen einen beispielhaften Montagevorgang für eine erfindungsgemäße Dichtmanschette 1 gemäß der dritten Ausführungsform.

Zunächst wird, wie in Fig. 6 dargestellt, der Schlitz 7 sowie der bevorzugt parallel dazu liegende Schlitz in dem zweiteiligen Liner 11a, 11b leicht aufgespreizt.

Hiernach wird ein Teil des Liners 11b entfernt, so dass die Klebeschicht 5 darunter freigelegt wird. Die Dichtmanschette 1 wird dann wie in Fig. 7 dargestellt mit der freigelegten Klebeschicht 5 auf der Gebäudehülle 3 aufgebracht, wobei der noch vorhandene Teil des Liners 11 a verhindert, dass die Dichtmanschette 1 in einer ungewollten Position mit der Leitung 10 oder der Gebäudehülle 3 verklebt.

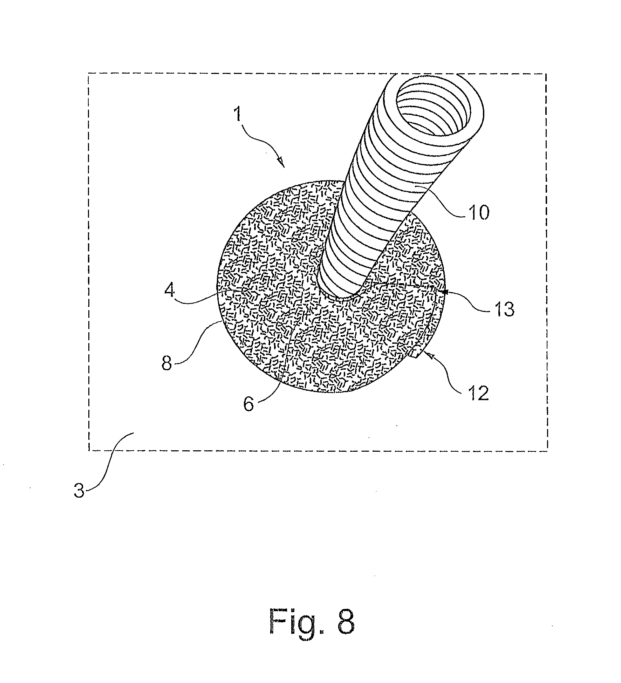

Wie in Fig. 8 dargestellt, wird der Schlitz 7 nach dem Anbringen der Dichtmanschette 1 um die Leitung 10 wieder geschlossen. Dazu wird der verbliebene Teil des Liners 11a abgezogen und der zweite Randbereich 13 über den ersten Randbereich 12 gebracht und auf diesem mittels der Klebeschicht 5 verklebt. Alternativ kann dieser Vorgang auch erfolgen, indem zuerst Teil 11 a des Liners abgezogen wird und der Randbereich 12 über den Randbereich 13 gebracht wird.

Aufgrund der guten Verformbarkeit des Trägermaterials 4 kann dieses so weit verformt werden, dass der Schlitz 7 geschlossen werden kann, ohne dass Teile der Dichtmanschette 1 aus der Ebene, in welcher diese verklebt wird, hinausstehen.

Der Verschluss des Schlitzes entlang der Trennmarkierung, der Sollbruchstelle oder des Schlitzes 7 lässt sich dabei allein durch die Verformung des Materials der Dichtmanschette 1 erreichen, d.h. insbesondere durch die Verformung des Trägermaterials 4. Die restliche Fläche der Dichtmanschette 1 lässt sich dabei z.B. mit der Gebäudehülle 3 im Wesentlichen so verkleben, dass sich keine Ausgleichsfalten bilden oder sich die Dichtmanschette 1 im Laufe der Zeit durch Zugkräfte von der Gebäudehülle 3 wieder abhebt.

Figur 8 stellt somit ein System aus der Dichtmanschette 1 und einer Leitung 10 in verklebtem Zustand dar, wie es auf einer Gebäudehülle 3 angeordnet ist. Die Leitung 10 verläuft im Wesentlichen durch das Zentrum 9 der Dichtmanschette 1. Der Schlitz 7 ist verschlossen, da der zweite Randbereicht 13 auf dem ersten Randbereich 12 verklebt ist. Um die Leitung 10 bildet die Dichtmanschette 1 einen Kragen 6 aus, welcher eine besonders gute Abdichtung der Hindurchführung der Leitung 10 durch die Gebäudehülle 3 gewährleistet. Dieser Kragen 6 wird aus überschüssiger Fläche der Dichtmanschette 1 gebildet, welche sich an der Leitung 10 aufstellt und sich aufgrund der guten Verformbarkeit der Dichtmanschette 1 an die Leitung 10 anschmiegt und die Leitung mit der Gebäudehülle luft- und/oder wasserdicht verbindet.

### Bezugszeichenliste:

- Dichtmanschette: 1
- Aussparung: 2
- Gebäudehülle: 3
- Trägermaterial: 4
- Klebeschicht: 5
- Kragen: 6
- Trennmarkierung/Sollbruchstelle/Schlitz: 7
- Äußerer Rand: 8
- Zentrum: 9
- Leitung: 10
- Liner: 11, 11a, 11b
- Erster Randbereich: 12
- Zweiter Randbereich: 13

## Patentansprüche

1. Dichtmanschette (1) zum luftdichten Abdichten von Leitungsdurchführungen (2) durch eine Gebäudehülle (3), welche nur aus einer Scheibe geformt ist, und aus einem Trägermaterial (4) und einer Klebeschicht (5) besteht, mit einer Trennmarkierung, einer Sollbruchstelle oder einem Schlitz (7) vom äußeren Rand (8) in Richtung zum Zentrum (9) der Manschette (1), wobei beiderseits der Trennmarkierung, der Sollbruchstelle oder des Schlitzes (7) Randbereiche (12, 13) durch Verformung übereinanderschiebbar und miteinander verklebbar sind, **dadurch gekennzeichnet, daß** die Klebeschicht (5) selbstklebend und auf zumindest einer Seite der Manschette (1) von einem Liner (11) abgedeckt ist, und ein Flächengewicht von mindestens 0,14 kg/m² aufweist, um sich einer Oberfläche einer abzudichtenden Leitungsdurchführung anzupassen.

2. Dichtmanschette (1) nach Anspruch 1, wobei der Schlitz (7) im Trägermaterial (4) oder im Trägermaterial (4) und der Klebeschicht (5) vorhanden ist.

3. Dichtmanschette (1) nach Anspruch 2, wobei der Schlitz (7) mindestens 0,0005 m, bevorzugt mindestens 0,001 m, besonders bevorzugt mindestens 0,002 m und am Bevorzugtesten mindestens 0,003 m breit ist.

4. Dichtmanschette (1) nach einem der Ansprüche 1 bis 3, wobei das Trägermaterial (4) aus Vlies oder einem mit Kunststoff beschichteten Vlies besteht.

5. Dichtmanschette (1) nach Anspruch 4, wobei das Vlies oder das mit Kunststoff beschichtete Vlies über ein Flächengewicht von mindestens 0,01 kg/m², bevorzugt mindestens 0,03 kg/m², und noch bevorzugter mindestens 0,06 kg/m² verfügt.

6. Dichtmanschette (1) nach einem der Ansprüche 1 bis 3, wobei das Trägermaterial (4) aus einer Kunststofffolie besteht.

7. Dichtmanschette (1) nach Anspruch 1, wobei der Liner (11) mindestens einen Schlitz aufweist.

8. Dichtmanschette (1) nach Anspruch 1 oder 7, wobei der Liner (11) aus mindestens zwei Teilen (11a, 11b) besteht, die leicht überlappend angeordnet sind.

9. Dichtmanschette (1) nach Anspruch 1, wobei der Liner (11) in einer Richtung, insbesondere in paralleler Richtung zu der Trennmarkierung, der Sollbruchstelle oder dem Schlitz (7), eine geringe Weiterreißkraft und Führungsmittel aufweist, durch welche sich eine Risslinie im Wesentlichen in dieser Richtung ausbreitet.

10. Dichtmanschette (1) nach einem der Ansprüche 1 bis 9, wobei die Klebeschicht (5) ein Flächengewicht von mindestens 0,38 kg/m², bevorzugt mindestens 0,7 kg/m², besonders bevorzugt mindestens 1kg/m² und am Bevorzugtesten mindestens 1,5 kg/m² auf weist.

11. Dichtmanschette (1) nach einem der Ansprüche 1 bis 10, wobei die Manschette (1) im Wesentlichen im Zentrum (9) eine Aussparung (2) aufweist.

12. Dichtmanschette (1) nach einem der Ansprüche 1 bis 11, wobei das Trägermaterial (4) wasserdicht und/oder durch Zugabe von UV-Schutzmittel UV-beständig ausgebildet ist.

13. Dichtmanschette (1) nach einem der Ansprüche 1 bis 12, wobei die Oberfläche der Dichtmanschette (1) mindestens 10 cm², bevorzugt mindestens 20 cm², bevorzugter mindestens 27 cm², und am Bevorzugtesten mindestens 35 cm² beträgt.

14. System aus der Dichtmanschette (1) nach einem der Ansprüche 1 bis 13 und einer Leitung (10), welche im Wesentlichen im Zentrum (9) der Dichtmanschette (1) angeordnet ist, wobei die Randbereiche (12, 13) miteinander verklebt sind und ein Kragen (6) um die Leitung (10) bilden.

## Claims

1. Sealing sleeve (1) for hermetically sealing cable grommets (2) through a cladding (3),
which sealing sleeve (1) is only formed from one disc and
consists of a carrier material (4) and an adherence layer (5),
with a separating mark, a predetermined breaking point or a slot (7) from the outer edge (8) in the direction to the center (9) of the sleeve (1), wherein, on both sides of the separating mark, the predetermined breaking point or the slot (7), edge regions (12, 13) are capable of being moved on top of each other and of being adhered to each other,
**characterized in that**
the adherence layer (5) is self-adhesive and is covered by a liner (11) on at least one side of the sleeve (1), and
comprises an area density of at least 0,14 kg/m² to adjust itself to a surface of a cable grommet to be sealed.

2. Sealing sleeve (1) according to claim 1, wherein the slot (7) is present in the carrier material (4) or in the carrier material (4) and the adherence layer (5).

3. Sealing sleeve (1) according to claim 2, wherein the slot (7) is at least 0,0005 m, preferably at least 0,001 m, more preferably at least 0,002 m and most preferably at least 0,003 m wide.

4. Sealing sleeve (1) according to one of claims 1 to 3, wherein the carrier material (4) consists of fleece or a fleece coated with a plastic.

5. Sealing sleeve (1) according to claim 4, wherein the fleece or the fleece coated with plastic has an area density of at least 0,01 kg/m², preferably of at least 0,03 kg/m², more preferably of at least 0,06 kg/m².

6. Sealing sleeve (1) according to one of claims 1 to 3, wherein the carrier material (4) consists of a plastic film.

7. Sealing sleeve (1) according to claim 1, wherein the liner (11) comprises at least one slot.

8. Sealing sleeve (1) according to one of claims 1 to 7, wherein the liner (11) consists of at least two parts (11a, 11b) that are arranged slightly overlapping.

9. Sealing sleeve (1) according to claim 1, wherein the liner (11) comprises, in the direction, in particular in direction parallel to the separating mark, of the predetermined breaking point or the slot (7), a small tear resistance force and guiding means, through which a tear line essentially expands in that direction.

10. Sealing sleeve (1) according to one of claims 1 to 9, wherein the adherence layer (5) has an area density of at least 0,38 kg/m², preferably of at least 0,7 kg/m², more preferably of at least 1 kg/m² and most preferably of at least 1,5 kg/m².

11. Sealing sleeve (1) according to one of claims 1 to 10, wherein the sleeve (1) comprises a recess essentially in the center (9).

12. Sealing sleeve (1) according to one of claims 1 to 11, wherein the carrier material (4) is formed watertight and/or UV-resistant by addition of UV protection means.

13. Sealing sleeve (1) according to one of claims 1 to 12, wherein the surface of the sealing sleeve (1) is at least 10 cm², preferably at least 20 cm², more preferably at least 27 cm² and most preferably at least 35 cm².

14. System of the sealing sleeve (1) according to one of claims 1 to 13 and a cable (10) that is essentially arranged in the center (9) of the sealing sleeve (1), wherein the edge regions (12, 13) are adhered to each other and form a collar (6) around the cable (10).

## Revendications

1. Manchon d'étanchéité (1) pour étancher à l'air des passages de conduites (2) à travers une enveloppe de bâtiment (3), lequel manchon est formé seulement à partir d'un disque et se compose d'un matériau de support (4) et d'une couche adhésive (5), avec une marque de séparation, une zone de rupture ou une fente (7) partant du bord extérieur (8) en direction du centre (9) du manchon (1), des zones de bord (12, 13) des deux côtés de la marque de séparation, de la zone de rupture ou de la fente (7) pouvant être superposées par déformation et collées entre elles, **caractérisé en ce que** la couche adhésive (5) est autocollante et recouverte sur au moins un côté du manchon (1) par une doublure (11) et présente un poids par unité de surface d'au moins 0,14 kg/m² pour s'adapter à une surface d'un passage de conduite à étancher.

2. Manchon d'étanchéité (1) selon la revendication 1, dans lequel la fente (7) se trouve dans le matériau de support (4) ou dans le matériau de support (4) et la couche adhésive (5).

3. Manchon d'étanchéité (1) selon la revendication 2, dans lequel la fente (7) est large d'au moins 0,0005 m, de préférence d'au moins 0,001 m, particulièrement de préférence d'au moins 0,002 m et tout particulièrement de préférence d'au moins 0,003 m.

4. Manchon d'étanchéité (1) selon l'une des revendications 1 à 3, dans lequel le matériau de support (4) est composé d'un non-tissé ou d'un non-tissé revêtu d'une matière plastique.

5. Manchon d'étanchéité (1) selon la revendication 4, dans lequel le non-tissé ou le non-tissé revêtu d'une matière plastique possède un poids par unité de surface d'au moins 0,01 kg/m², de préférence d'au moins 0,03 kg/m² et encore plus de préférence d'au moins 0,06 kg/m².

6. Manchon d'étanchéité (1) selon l'une des revendications 1 à 3, dans lequel le matériau de support (4) est composé d'une feuille en matière plastique.

7. Manchon d'étanchéité (1) selon la revendication 1, dans lequel la doublure (11) est pourvu d'au moins une fente.

8. Manchon d'étanchéité (1) selon la revendication 1 ou 7, dans lequel la doublure (11) est composée d'au moins deux parties (11a, 11b) qui sont disposées de manière à se chevaucher légèrement.

9. Manchon d'étanchéité (1) selon la revendication 1, dans lequel la doublure (11) présente, dans une direction, en particulier dans une direction parallèle à la marque de séparation, à la zone de rupture ou à la fente (7), une faible résistance à la déchirure et des moyens de guidage permettant à une ligne de déchirure de se propager sensiblement dans cette direction.

10. Manchon d'étanchéité (1) selon l'une des revendications 1 à 9, dans lequel la couche adhésive (5) possède un poids par unité de surface d'au moins 0,38 kg/m², de préférence d'au moins 0,7 kg/m², particulièrement de préférence d'au moins 1 kg/m² et tout particulièrement de préférence d'au moins 1,5 kg/m².

11. Manchon d'étanchéité (1) selon l'une des revendications 1 à 10, lequel manchon (1) est pourvu, sensiblement au centre (9), d'un évidement (2).

12. Manchon d'étanchéité (1) selon l'une des revendications 1 à 11, dans lequel le matériau de support (4) est conçu étanche à l'eau et/ou, par ajout d'un agent de protection contre les UV, résistant aux UV.

13. Manchon d'étanchéité (1) selon l'une des revendications 1 à 12, dans lequel la surface du manchon d'étanchéité (1) est d'au moins 10 cm², de préférence d'au moins 20 cm², davantage de préférence d'au moins 27cm² et tout particulièrement de préférence d'au moins 35 cm².

14. Système composé du manchon d'étanchéité (1) selon l'une des revendications 1 à 13 et d'une conduite (10) disposée sensiblement au centre (9) du manchon d'étanchéité (1), dans lequel les zones de bord (12, 13) sont collées entre elles et forment une collerette (6) autour de la conduite (10).
